# EUROPEAN PATENT APPLICATION

(11) **EP 3 992 774 A1**
(43) Date of publication of application: **04.05.2022**
(21) Application number: 21827377.9
(22) Date of filing: 05.08.2021
(51) Int. Cl.: G06F 7/53

(54) **METHOD AND DEVICE FOR IMPLEMENTING DOT PRODUCT OPERATION, ELECTRONIC DEVICE, AND STORAGE MEDIUM**

(30) Priority: 18.09.2020 CN 202010984688
(71) Applicant: BEIJING BAIDU NETCOM SCIENCE AND TECHNOLOGY CO. LTD., 100085 Beijing (CN)
(72) Inventor: The designation of the inventor has not yet been filed
(74) Representative: dompatent von Kreisler Selting Werner - Partnerschaft von Patent- und Rechtsanwälten mbB
(86) International application number: PCT/CN2021/110955
(87) International publication number: WO 2022/057502

(57) **Abstract**

This application discloses a method and apparatus for implementing a dot product operation, an electronic device and a storage medium, and relates to the fields of deep learning and artificial intelligence; the method may include: acquiring N operand sets, N is a positive integer greater than one, the N operand sets are all in a first data input format or all in a second data input format, the first data input format includes half-precision floating point data and char data, and the second data input format includes signed fixed point data and the char data; determining input data corresponding to each operand, and inputting the input data into a corresponding multiplier to obtain an output result, where different operands correspond to different multipliers respectively; and calculating a sum of the output results of the multipliers by one or more adders to obtain an operation result of the N-dot-product operation. The solution of this application may save a hardware cost and power consumption, and guarantee higher operation precision.

## Description

This application claims priority to Chinese Patent Application No. 2020109846887, filed on September 18, 2020, entitled "Method and Apparatus for Implementing Dot Product Operation, Electronic Device and Storage Medium".

### TECHNICAL FIELD

This application relates to computer application technologies, particularly to the fields of deep learning and artificial intelligence, and more particularly to a method and apparatus for implementing a dot product operation, an electronic device and a storage medium.

### BACKGROUND

In currently popular deep learning and neural networks, there exist a large number of convolution operations. In order to pursue operation precision, a floating point operation mode is usually adopted in a chip, which has a defect of increasing a hardware cost, power consumption, and in order to save the hardware cost and the power consumption, a fixed point operation mode may be adopted, which brings an operation precision loss, resulting in a great reduction of a network performance. For example, it is sometimes desirable to meet high demands for operation precision and efficiency in some voice-related applications at a relatively small cost.

### SUMMARY

This application provides a method and apparatus for implementing a dot product operation, an electronic device and a storage medium.

A method for implementing a dot product operation includes:
acquiring N operand sets, where N is a positive integer greater than one, the N operand sets are all in a first data input format or all in a second data input format, the first data input format includes half-precision floating point data and char data, and the second data input format includes signed fixed point data and the char data;
determining input data corresponding to each operand, and inputting the input data into a corresponding multiplier to obtain an output result, where different operands correspond to different multipliers respectively; and
calculating a sum of the output results of the multipliers by one or more adders to obtain an operation result of the N-dot-product operation.

An apparatus for implementing a dot product operation includes:
an acquiring module configured to acquire N operand sets, N is a positive integer greater than one, the N operand sets are all in a first data input format or all in a second data input format, the first data input format includes half-precision floating point data and char data, and the second data input format includes signed fixed point data and the char data; and
an operation module configured to determine input data corresponding to each operand, and input the input data into a corresponding multiplier to obtain an output result, where different operands correspond to different multipliers respectively; and to calculate a sum of the output results of the multipliers by one or more adders to obtain an operation result of the N-dot-product operation.

An electronic device includes:
at least one processor; and
a memory connected with the at least one processor communicatively;
where the memory stores instructions executable by the at least one processor to enable the at least one processor to perform the method as mentioned above.

There is provided a non-transitory computer readable storage medium storing computer instructions, which, when executed by a computer, cause the computer to perform the method as mentioned above.

One embodiment of the above application has the following advantages or beneficial effects: the N-dot-product operation simultaneously supports two different data input formats, i.e., the first data input format and the second data input format, the first data input format includes the half-precision floating point data and the char data, and the second data input format includes the signed fixed point data and the char data, such that the operands in different data input formats may be flexibly input according to actual needs to implement the dot product operation, advantages of a floating point operation and a fixed point operation are taken into account, and since there is no need to perform the floating point operation all the time, a hardware cost and power consumption are saved, and operation precision, or the like, is guaranteed by the floating point operation.

It should be understood that the statements in this section are not intended to identify key or critical features of the embodiments of the present disclosure, nor limit the scope of the present disclosure. Other features of the present disclosure will become apparent from the following description.

### BRIEF DESCRIPTION OF THE DRAWINGS

The drawings are used for better understanding the present solution and do not constitute a limitation of the present application. In the drawings,
Fig. 1 is a flow chart of a method for implementing a dot product operation according to a first embodiment of the present application;
Fig. 2 is a schematic diagram of a 4-dot-product operation process in the present application;
Fig. 3 is a flow chart of a method for implementing a dot product operation according to a second embodiment of the present application;
Fig. 4 is a flow chart of a method for implementing a dot product operation according to a third embodiment of the present application;
Fig. 5 is a schematic structural diagram of an apparatus 50 for implementing a dot product operation according to an embodiment of the present application; and
Fig. 6 is a block diagram of an electronic device for the method according to some embodiments of the present application.

### DETAILED DESCRIPTION OF EMBODIMENTS

The following part will illustrate exemplary embodiments of the present application with reference to the drawings, including various details of the embodiments of the present application for a better understanding. The embodiments should be regarded only as exemplary ones. Therefore, those skilled in the art should appreciate that various changes or modifications can be made with respect to the embodiments described herein without departing from the scope and spirit of the present application. Similarly, for clarity and conciseness, the descriptions of the known functions and structures are omitted in the descriptions below.

In addition, it should be understood that the term "and/or" only describes an association relationship between associated objects, and indicates that three relationships may exist. For example, A and/or B may indicate three cases: only A exists; both A and B exist; and only B exists. In addition, in this specification, the symbol "/" generally indicates that associated objects have a relationship of "or".

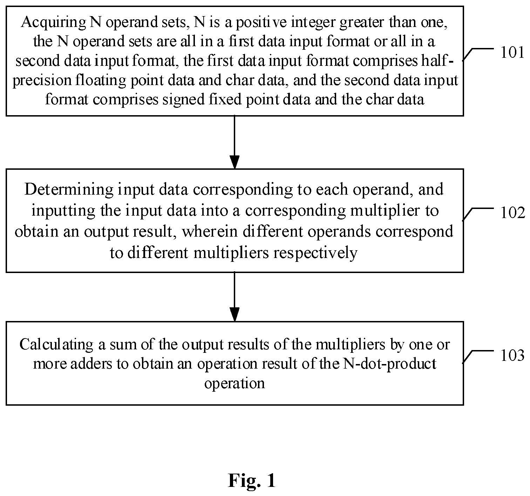

Fig. 1 is a flow chart of a method for implementing a dot product operation according to a first embodiment of the present application. As shown in Fig. 1, the method includes the following implementation steps:
101: acquiring N operand sets, where N is a positive integer greater than one, the N operand sets are all in a first data input format or all in a second data input format, the first data input format includes half-precision floating point data and char data, and the second data input format includes signed fixed point data and the char data.

The N operand sets are either all in the first data input format or all in the second data input format, the first data input format may include the half-precision floating point data and the char data, and the second data input format may include the signed fixed point data and the char data.

102: determining input data corresponding to each operand, and inputting the input data into a corresponding multiplier to obtain an output result, herein different operands correspond to different multipliers respectively.

The input data corresponding to each group of operands may be input into the corresponding multiplier, so as to obtain the output results of the multipliers (i.e., N output results).

103: calculating a sum of the output results of the multipliers by one or more adders to obtain an operation result of the N-dot-product operation.

A result obtained by adding the N output results by the one or more adders is the required operation result of the N-dot-product operation.

It can be seen that, the N-dot-product operation in the above-mentioned embodiment simultaneously supports two different data input formats, i.e., the first data input format and the second data input format, the first data input format includes the half-precision floating point data and the char data, and the second data input format includes the signed fixed point data and the char data, such that the operands in different data input formats may be flexibly input according to actual needs to implement the dot product operation, advantages of a floating point operation and a fixed point operation are taken into account, and since there is no need to perform the floating point operation all the time, a hardware cost and power consumption are saved, and operation precision, or the like, is guaranteed by the floating point operation.

Moreover, a hybrid input mode is supported; for example, the first data input format includes two different types of data, i.e., the half-precision floating point data and the char data, and the second data input format includes two different types of data, i.e., the signed fixed point data and the char data, which is more suitable for an actual operation requirement in a convolution operation, thereby improving an operation performance, or the like.

In practical applications, whether to employ the first data input format or to employ the second data input format may be determined according to characteristic analysis, performance requirements, or the like, of a network, and the two data input formats may be configured by means of a register.

As described in 102, the input data corresponding to each operand may be determined, and the input data may be input into the corresponding multiplier to obtain the output result.

Specifically, for the operand in the first data input format, significand data may be extracted from the half-precision floating point data in the operand, and the significand data and the char data in the operand may be used as the input data. For the operand in the second data input format, the signed fixed point data and the char data in the operand may be directly used as the input data.

The half-precision floating point data can not be input directly to the multiplier for multiplication, the significand data in the half-precision floating point data is required to be extracted, the significand data and the char data are used as two inputs of the multiplier, and a method of extracting the significand data from the half-precision floating point data is of prior art. The signed fixed point data and the char data may be directly used as two inputs of the multiplier.

The multiplier may calculate and output a product as the output result. For the operand in the first data input format, exponent data may also be extracted from the half-precision floating point data in the operand, and correspondingly, after the output result of the multiplier is obtained, the output result may be converted into full-precision fixed point data according to the exponent data, and a conversion method is also of prior art. In this way, it may be guaranteed that no precision loss of a subsequent operation occurs.

Usually, N is an even number, and preferably, N may be 4; that is, the N-dot-product operation may be a 4-dot-product operation. Four multipliers and three adders may be used for the 4-dot-product operation; that is, the multipliers may include a first multiplier, a second multiplier, a third multiplier, and a fourth multiplier, and the adders may include a first adder, a second adder and a third adder.

As described in 103, the sum of the output results of the multipliers may be calculated by one or more adders to obtain the operation result of the N-dot-product operation. Specifically, the sum of the output results of the first multiplier and the second multiplier may be calculated by the first adder, the sum of the output results of the third multiplier and the fourth multiplier may be calculated by the second adder, and a sum of output results of the first adder and the second adder may be calculated by the third adder, thereby obtaining the operation result of the 4-dot-product operation.

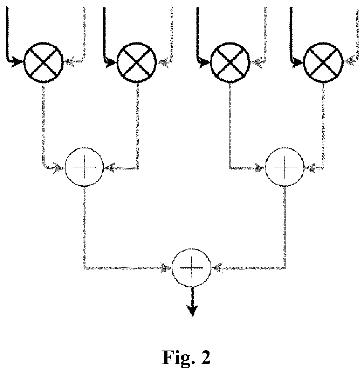

Based on the above description, Fig. 2 is a schematic diagram of a 4-dot-product operation process in the present application. As shown in Fig. 2, two layers of addition operations may be included, the addition operation in the first layer corresponds to operations of the first adder and the second adder, and the addition operation in the second layer corresponds to an operation of the third adder.

In theory, N may be other even numbers, such as 2, 6, or the like, and usually, the longer a dot product, the shorter an operation time, but the greater a required hardware cost, or the like, and therefore, preferably, N is to set to 4 after various factors are overall considered in the present application, thereby guaranteeing a higher operation speed without consuming a too high hardware cost, or the like.

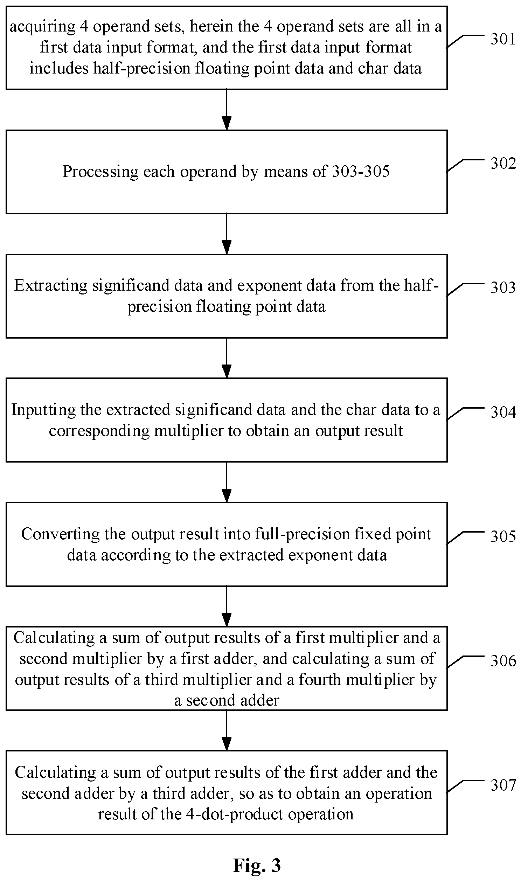

Fig. 3 is a flow chart of a method for implementing a dot product operation according to a second embodiment of the present application. As shown in Fig. 3, the method includes the following implementation steps:
301: acquiring 4 operand sets, herein the 4 operand sets are all in a first data input format, and the first data input format includes half-precision floating point data and char data.

In this embodiment, it is assumed that a 4-dot-product operation is performed.

302: processing each operand by means of 303-305.

That is, each operand set in the 4 operand sets is processed by means of 303-305.

303: extracting significand data and exponent data from the half-precision floating point data.

304: inputting the extracted significand data and the char data to a corresponding multiplier to obtain an output result.

305: converting the output result into full-precision fixed point data according to the extracted exponent data.

306: calculating a sum of output results of a first multiplier and a second multiplier by a first adder, and calculating a sum of output results of a third multiplier and a fourth multiplier by a second adder.

It is assumed that the 4 multipliers in this embodiment are the first multiplier, the second multiplier, the third multiplier and the fourth multiplier respectively. After the above-mentioned processing operation, the output results of the 4 multipliers may be obtained.

307: calculating a sum of output results of the first adder and the second adder by a third adder, so as to obtain an operation result of the 4-dot-product operation.

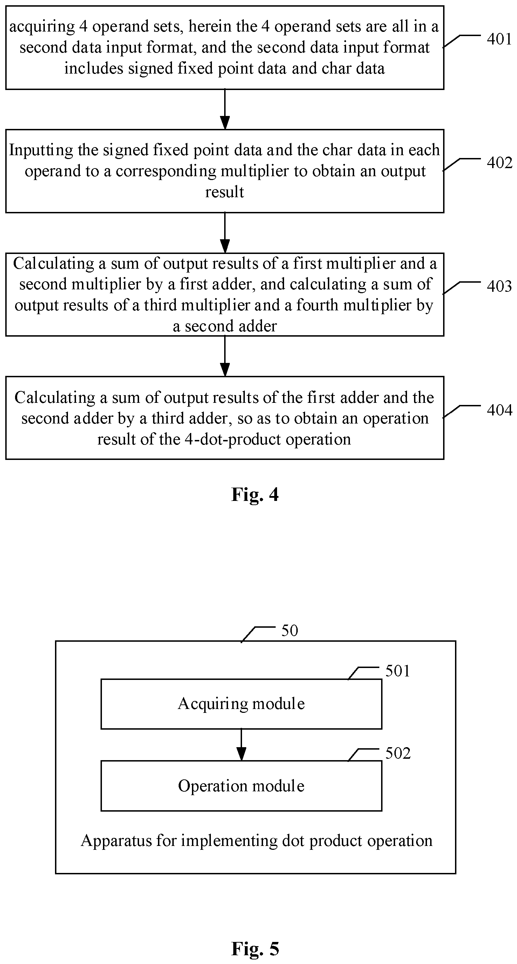

Fig. 4 is a flow chart of a method for implementing a dot product operation according to a third embodiment of the present application. As shown in Fig. 4, the method includes the following implementation steps:
401: acquiring 4 operand sets, herein the 4 operand sets are all in a second data input format, and the second data input format includes signed fixed point data and char data.

In this embodiment, it is assumed that a 4-dot-product operation is performed.

402: inputting the signed fixed point data and the char data in each operand to a corresponding multiplier to obtain an output result.

403: calculating a sum of output results of a first multiplier and a second multiplier by a first adder, and calculating a sum of output results of a third multiplier and a fourth multiplier by a second adder.

It is assumed that the 4 multipliers in this embodiment are the first multiplier, the second multiplier, the third multiplier and the fourth multiplier respectively. After the above-mentioned processing operation, the output results of the 4 multipliers may be obtained.

404: calculating a sum of output results of the first adder and the second adder by a third adder, so as to obtain an operation result of the 4-dot-product operation.

It should be noted that for simplicity of description, the above-mentioned embodiments of the method are described as combinations of a series of acts, but those skilled in the art should understand that the present application is not limited by the described order of acts, as some steps may be performed in other orders or simultaneously according to the present application. Further, those skilled in the art should also understand that the embodiments described in this specification are preferred embodiments and that acts and modules referred to are not necessary for the present application. In addition, for parts that are not described in detail in a certain embodiment, reference may be made to the related descriptions of other embodiments.

The above is a description of an embodiment of the method, and an embodiment of an apparatus according to the present application will be further described below.

Fig. 5 is a schematic structural diagram of an apparatus 50 for implementing a dot product operation according to an embodiment of the present application. As shown in Fig. 5, the apparatus includes:
an acquiring module 501 configured to acquire N operand sets, herein N is a positive integer greater than one, the N operand sets are all in a first data input format or all in a second data input format, the first data input format includes half-precision floating point data and char data, and the second data input format includes signed fixed point data and the char data; and
an operation module 502 configured to determine input data corresponding to each operand, and input the input data into a corresponding multiplier to obtain an output result, herein different operands correspond to different multipliers respectively; and calculate a sum of the output results of the multipliers by one or more adders to obtain an operation result of the N-dot-product operation.

In practical applications, whether to employ the first data input format or to employ the second data input format may be determined according to characteristic analysis, performance requirements, or the like, of a network.

For the operand in the first data input format, the operation module 502 may extract significand data from the half-precision floating point data in the operand, and use the significand data and the char data in the operand as the input data.

For the operand in the second data input format, the operation module 502 may directly use the signed fixed point data and the char data in the operand as the input data.

In addition, for the operand in the first data input format, the operation module 502 may further extract exponent data from the half-precision floating point data in the operand, and convert the output result of the corresponding multiplier into full-precision fixed point data according to the exponent data.

Preferably, N is 4, the multipliers include a first multiplier, a second multiplier, a third multiplier, and a fourth multiplier, and the adders include a first adder, a second adder and a third adder.

Correspondingly, the operation module 502 may calculate the sum of the output results of the first multiplier and the second multiplier by the first adder, calculate the sum of the output results of the third multiplier and the fourth multiplier by the second adder, and calculate a sum of output results of the first adder and the second adder by the third adder, thereby obtaining the operation result of the 4-dot-product operation.

For the specific work flow of the embodiment of the apparatus shown in Fig. 5, reference is made to the related description in the foregoing embodiment of the method, and details are not repeated.

In conclusion, with the solution of the apparatus embodiment of the present application, the N-dot-product operation simultaneously supports two different data input formats, i.e., the first data input format and the second data input format, the first data input format includes the half-precision floating point data and the char data, and the second data input format includes the signed fixed point data and the char data, such that the operands in different data input formats may be flexibly input according to actual needs to implement the dot product operation, advantages of a floating point operation and a fixed point operation are taken into account, and since there is no need to perform the floating point operation all the time, a hardware cost and power consumption are saved, and operation precision, or the like, is guaranteed by the floating point operation.

As mentioned above, N may be 4, the 4-dot-product operation in the present application may be matched with a peripheral storage structure and an instruction set, a convolution operation may be efficiently and highly precisely completed under a low bandwidth occupation condition, and the 4-dot-product operation may be adapted to various network models, thereby greatly meeting demands for computing power in the models, or the like.

According to some embodiments of the present application, there are also provided an electronic device and a readable storage medium.

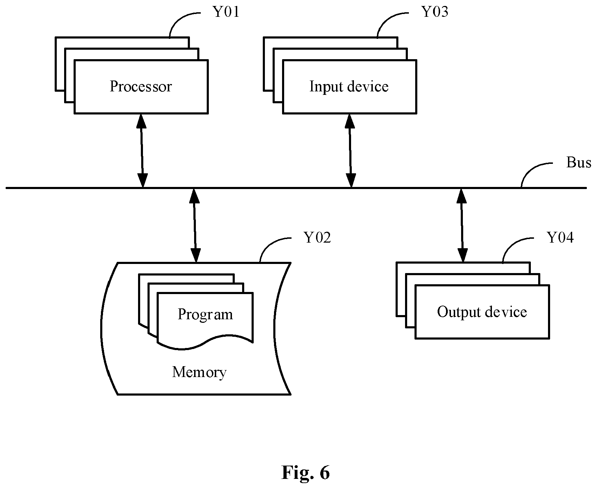

Fig. 6 is a block diagram of an electronic device for the method according to some embodiments of the present application. The electronic device is intended to represent various forms of digital computers, such as laptop computers, desktop computers, workstations, personal digital assistants, servers, blade servers, mainframe computers, and other appropriate computers. The electronic device may also represent various forms of mobile apparatuses, such as personal digital processors, cellular telephones, smart phones, wearable devices, and other similar computing apparatuses. The components shown herein, their connections and relationships, and their functions, are meant to be exemplary only, and are not meant to limit implementation of the present application described and/or claimed herein.

As shown in Fig. 6, the electronic device includes one or more processors Y01, a memory Y02, and interfaces configured to connect the various components, including high-speed interfaces and low-speed interfaces. The components are interconnected using different buses and may be mounted at a common motherboard or in other manners as desired. The processor may process instructions for execution within the electronic device, including instructions stored in or at the memory to display graphical information for a graphical user interface at an external input/output apparatus, such as a display device coupled to the interface. In other implementations, plural processors and/or plural buses may be used with plural memories, if desired. Also, plural electronic devices may be connected, with each device providing some of necessary operations (for example, as a server array, a group of blade servers, or a multi-processor system). In Fig. 6, one processor Y01 is taken as an example.

The memory Y02 is configured as the non-transitory computer readable storage medium according to the present application. The memory stores instructions executable by the at least one processor to cause the at least one processor to perform a method according to the present application. The non-transitory computer readable storage medium according to the present application stores computer instructions for causing a computer to perform the method according to the present application.

The memory Y02 which is a non-transitory computer readable storage medium may be configured to store non-transitory software programs, non-transitory computer executable programs and modules, such as program instructions/modules corresponding to the method according to the embodiment of the present application. The processor Y01 executes various functional applications and data processing of a server, that is, implements the method according to the above-mentioned embodiment, by running the non-transitory software programs, instructions, and modules stored in the memory Y02.

The memory Y02 may include a program storage area and a data storage area, herein the program storage area may store an operating system and an application program required for at least one function; the data storage area may store data created according to use of the electronic device, or the like. Furthermore, the memory Y02 may include a high-speed random access memory, or a non-transitory memory, such as at least one magnetic disk storage device, a flash memory device, or other non-transitory solid state storage devices. In some embodiments, optionally, the memory Y02 may include memories remote from the processor Y01, and such remote memories may be connected to the electronic device via a network. Examples of such a network include, but are not limited to, the Internet, intranets, blockchain networks, local area networks, mobile communication networks, and combinations thereof.

The electronic device may further include an input device Y03 and an output device Y04. The processor Y01, the memory Y02, the input deviceY03 and the output deviceY04 may be connected by a bus or other means, and Fig. 6 takes the connection by a bus as an example.

The input deviceY03 may receive input numeric or character information and generate key signal input related to user settings and function control of the electronic device, such as a touch screen, a keypad, a mouse, a track pad, a touch pad, a pointing stick, one or more mouse buttons, a trackball, a joystick, or the like. The output deviceY04 may include a display device, an auxiliary lighting deviceand a tactile feedback device(for example, a vibrating motor), or the like. The display device may include, but is not limited to, a liquid crystal display, a light emitting diode display, and a plasma display. In some implementations, the display device may be a touch screen.

Various implementations of the systems and technologies described here may be implemented in digital electronic circuitry, integrated circuitry, application specific integrated circuits, computer hardware, firmware, software, and/or combinations thereof. The systems and technologies may be implemented in one or more computer programs which are executable and/or interpretable on a programmable system including at least one programmable processor, and the programmable processor may be special or general, and may receive data and instructions from, and transmit data and instructions to, a storage system, at least one input apparatus, and at least one output apparatus.

These computer programs (also known as programs, software, software applications, or codes) include machine instructions for a programmable processor, and may be implemented using high-level procedural and/or object-oriented programming languages, and/or assembly/machine languages. As used herein, the terms "machine readable medium" and "computer readable medium" refer to any computer program product, device and/or apparatus (for example, magnetic discs, optical disks, memories, programmable logic devices) for providing machine instructions and/or data for a programmable processor, including a machine readable medium which receives machine instructions as a machine readable signal. The term "machine readable signal" refers to any signal for providing machine instructions and/or data for a programmable processor.

To provide interaction with a user, the systems and technologies described here may be implemented on a computer having: a display device (for example, a cathode ray tube or liquid crystal display monitor) for displaying information to a user; and a keyboard and a pointing device (for example, a mouse or a trackball) by which a user may provide input for the computer. Other kinds of apparatuses may also be used to provide interaction with a user; for example, feedback provided for a user may be any form of sensory feedback (for example, visual feedback, auditory feedback, or tactile feedback); and input from a user may be received in any form (including acoustic, speech or tactile input).

The systems and technologies described here may be implemented in a computing system (for example, as a data server) which includes a back-end component, or a computing system (for example, an application server) which includes a middleware component, or a computing system (for example, a user computer having a graphical user interface or a web browser through which a user may interact with an implementation of the systems and technologies described here) which includes a front-end component, or a computing system which includes any combination of such back-end, middleware, or front-end components. The components of the system may be interconnected through any form or medium of digital data communication (for example, a communication network). Examples of the communication network include: a local area network, a wide area network, a blockchain network and the Internet.

A computer system may include a client and a server. Generally, the client and the server are remote from each other and interact through the communication network. The relationship between the client and the server is generated by virtue of computer programs which run on respective computers and have a client-server relationship to each other. The server may be a cloud server, also called a cloud computing server or a cloud host, and is a host product in a cloud computing service system, so as to overcome the defects of high management difficulty and weak service expansibility in conventional physical host and VPS service.

It should be understood that various forms of the flows shown above may be used and reordered, and steps may be added or deleted. For example, the steps described in the present application may be executed in parallel, sequentially, or in different orders, which is not limited herein as long as the desired results of the technical solution disclosed in the present application may be achieved.

The above-mentioned implementations are not intended to limit the scope of the present application. It should be understood by those skilled in the art that various modifications, combinations, sub-combinations and substitutions may be made, depending on design requirements and other factors. Any modification, equivalent substitution and improvement made within the spirit and principle of the present application all should be included in the extent of protection of the present application.

## Claims

1. A method for implementing a dot product operation, comprising:
acquiring N operand sets, wherein N is a positive integer greater than one, the N operand sets are all in a first data input format or all in a second data input format, the first data input format comprises half-precision floating point data and char data, and the second data input format comprises signed fixed point data and the char data;
determining input data corresponding to each operand, and inputting the input data into a corresponding multiplier to obtain an output result, wherein different operands correspond to different multipliers respectively; and
calculating a sum of the output results of the multipliers by one or more adders to obtain an operation result of the N-dot-product operation.

2. The method according to claim 1, wherein the determining input data corresponding to each operand comprises:
for the operand in the first data input format, extracting significand data from the half-precision floating point data in the operand, and using the significand data and the char data in the operand as the input data.

3. The method according to claim 1, wherein the determining input data corresponding to each operand comprises:
for the operand in the second data input format, directly using the signed fixed point data and the char data in the operand as the input data.

4. The method according to claim 2, further comprising:
for the operand in the first data input format, extracting exponent data from the half-precision floating point data in the operand; and
converting the output result of the corresponding multiplier into full-precision fixed point data according to the exponent data.

5. The method according to claim 1, wherein
N is 4;
the multipliers comprise a first multiplier, a second multiplier, a third multiplier, and a fourth multiplier;
the one or more adders comprise a first adder, a second adder and a third adder;
the calculating the sum of the output results of the multipliers by the adder to obtain the operation result of the N-dot-product operation comprises:
calculating the sum of the output results of the first multiplier and the second multiplier by the first adder, calculating the sum of the output results of the third multiplier and the fourth multiplier by the second adder, and calculating a sum of output results of the first adder and the second adder by the third adder, so as to obtain the operation result of the 4-dot-product operation.

6. An apparatus for implementing a dot product operation, comprising:
an acquiring module configured to acquire N operand sets, wherein N is a positive integer greater than one, the N operand sets are all in a first data input format or all in a second data input format, the first data input format comprises half-precision floating point data and char data, and the second data input format comprises signed fixed point data and the char data; and
an operation module configured to determine input data corresponding to each operand, and input the input data into a corresponding multiplier to obtain an output result, wherein different operands correspond to different multipliers respectively; and to calculate a sum of the output results of the multipliers by one or more adders to obtain an operation result of the N-dot-product operation.

7. The apparatus according to claim 6, wherein
for the operand in the first data input format, the operation module extracts significand data from the half-precision floating point data in the operand, and uses the significand data and the char data in the operand as the input data.

8. The apparatus according to claim 6, wherein
for the operand in the second data input format, the operation module directly uses the signed fixed point data and the char data in the operand as the input data.

9. The apparatus according to claim 7, wherein
the operation module is further configured to, for the operand in the first data input format, extract exponent data from the half-precision floating point data in the operand, and convert the output result of the corresponding multiplier into full-precision fixed point data according to the exponent data.

10. The apparatus according to claim 6, wherein
N is 4;
the multipliers comprise a first multiplier, a second multiplier, a third multiplier, and a fourth multiplier;
the one or more adders comprise a first adder, a second adder and a third adder;
the operation module calculates the sum of the output results of the first multiplier and the second multiplier by the first adder, calculates the sum of the output results of the third multiplier and the fourth multiplier by the second adder, and calculates a sum of output results of the first adder and the second adder by the third adder, so as to obtain the operation result of the 4-dot-product operation.

11. An electronic device, comprising:
at least one processor; and
a memory connected with the at least one processor communicatively;
wherein the memory stores instructions executable by the at least one processor to cause the at least one processor to perform the method according to any one of claims 1 to 5.

12. A non-transitory computer readable storage medium storing computer instructions, which, when executed by a computer, causes the computer to perform the method according to any one of claims 1 to 5.
